# EUROPÄISCHE PATENTSCHRIFT

(11) **EP 1 738 942 B1**
(45) Veröffentlichungstag und Bekanntmachung des Hinweises auf die Patenterteilung: **03.11.2010**
(21) Anmeldenummer: 06005933.4
(22) Anmeldetag: 23.03.2006
(51) Int. Cl.: B60J 1/20

(54) **Fensterrollo für Kraftfahrzeuge mit formschlüssigem Anschlag auf dem Betätigungsglied**
Motor vehicle window blind with a stop rigidly fixed to the drive linkage
Store à enrouleur pour véhicule automobile muni d'une butée de contact fixée rigidement sur un actionneur

(30) Priorität: 29.06.2005 DE 102005030707
(43) Veröffentlichungstag der Anmeldung: 03.01.2007
(73) Patentinhaber: BOS GmbH & Co. KG, 73760 Ostfildern (DE)
(72) Erfinder: Hansen, Melf, 75053 Gondelsheim (DE); Walter, Herbert, 73061 Ebersbach (DE); Maier, Matthias, 73733 Esslingen (DE); Bühl, Olaf, 73095 Albershausen (DE); Weinbrenner, Harry, 72644 Oberboihingen (DE)
(74) Vertreter: Rüger, Barthelt & Abel Patentanwälte

(56) Entgegenhaltungen:
- DE-A1- 10 339 583

## Beschreibung

In der DE 103 39 583 ist ein Heckfensterrollo für Kraftfahrzeuge beschrieben, das eine unterhalb einer Hutablage drehbar gelagerte Wickelwelle aufweist. An der Wickelwelle ist mit einer Kante die Rollobahn befestigt. Die andere, parallel dazu verlaufende Kante der Rollobahn ist in einem Auszugsprofil verankert, das endseitig in Führungsschienen geführt ist. Die Führungsschienen sind in der Innenverkleidung des Fahrzeugs integriert und bestehen aus Kunststoff.

Zum Ausfahren des Rollos werden Schubglieder verwendet, die in den Führungsschienen geführt sind. Jedes Schubglied hat die Gestalt einer biegeelastischen Zahnstange, die rundum verzahnt ist. Jedes dieser Schubglieder kämmt mit einem Ausgangszahnrad eines Getriebemotors, womit ein formschlüssiger Antrieb gewährleistet ist.

Derartige Zubehörteile für Kraftfahrzeuge unterliegen einem erheblichen Preisdruck, weshalb auch die Steuerung für den Antriebsmotor möglichst einfach gestaltet ist. In der Regel wird so vorgegangen, dass von der zentralen Steuerung des Kraftfahrzeugs beim Ausfahren des Rollos der Motor für eine Zeit unter Strom gesetzt wird, die länger ist als die Maximalzeit, die zum Ausfahren erwartet wird. Der Ausfahrhub wird begrenzt, indem das Auszugsprofil an einem formschlüssigen Anschlag in der Führungsschiene zur Anlage kommt.

Bei aus Kunststoff hergestellten Führungsschienen kann dies problematisch sein.

Ausgehend hiervon ist es Aufgabe der Erfindung ein Fensterrollo für Kraftfahrzeuge zu schaffen, bei dem in der ausgefahrenen Endlage keine zusätzlichen Kräfte in der Führungsschiene auftreten.

Diese Aufgabe wird erfindungsgemäß durch das Fensterrollo mit den Merkmalen des Anspruches 1 gelöst.

Bei dem neuen Fensterrollo ist in der üblichen Weise eine drehbar gelagerte Wickelwelle vorgesehen. An der Wickelwelle ist die Rollobahn befestigt, die sich zwischen der Wickelwelle und dem Auszugsprofil erstreckt. Das Auszugsprofil ist zumindest einends, vorzugsweise beidends, in Führungsschienen geführt. Um die Rollobahn unter Spannung zu halten ist zusätzlich mit der Wickelwelle ein Federmotor gekoppelt. Dieser übernimmt auch das Aufwickeln der Rollobahn auf die Wickelwelle, wenn die linienförmigen Schubglieder aus den Führungsschienen zurückgezogen werden.

Zum Antrieb der Schubglieder dient ein Getriebemotor mit dessen Ausgangszahnrad die Schubglieder formschlüssig kämmen.

Das Antriebszahnrad teilt somit jedes Schubglied in ein Arbeitstrum und ein Leertrum, wobei das Arbeitstrum zwischen dem Antriebszahnrad und dem Auszugsprofil liegt, während das Leertrum den übrigen Teil des Schubglieds ausmacht. Die Länge des Arbeitstrums schwankt zwischen einem Kleinstwert bei eingefahrenem Rollo und einem Größtwert bei ausgefahrenem Rollo.

Um den Hub zu begrenzen, den das Schubglied maximal zurücklegen kann, wenn der Antriebsmotor beliebig lange eingeschaltet ist, sitzt auf dem Leertrum wenigstens eines der Schubglieder ein Anschlag. Der Anschlag wirkt mit einem komplementären Anschlag am Getriebemotor zusammen. Hierdurch wird das Leertrum im Bereich zwischen dem Anschlag und dem Zahnrad auf Zug belastet, was bedeutet, dass das Schubglied in diesem Bereich entsprechend zugfest sein muss.

Wenn der Anschlag zur Anlage kommt, wird die Bewegung definiert angehalten und der Motor blockiert. Dies Blockieren des Motors geschieht, ohne dass in den Führungsschienen oder den Verbindungsrohren, die die Führungsschienen mit dem Getriebemotor verbinden, zusätzliche Kräfte auftreten, die über die normale Betätigungskraft hinausgehen.

Der ortsfeste Anschlag kann entweder das Getriebegehäuse des Motors selber sein, oder ein entsprechender Anschlag der sonstwie ortsfest angeordnet ist. Selbstverständlich ist die Verwendung des Getriebegehäuses als ortsfester Anschlag, die technisch einfachste Lösung.

Für die Ausführung des Anschlags auf dem Leertrum kommen eine Reihe von Ausführungsformen. Der Anschlag kann als einfache Hülse ausgebildet sein, die mit dem Schubglied verkrümmt ist, oder auch die Form eines Hohlniets mit einer Flanschfläche um die Anlagefläche zu vergrößern.

In der nachfolgenden Figurenbeschreibung ist die Erfindung lediglich prinzipiell dargestellt. Es versteht sich, dass eine Reihe von Abwandlungen möglich sind um das Grundprinzip an die jeweiligen Verhältnisse anzupassen.

Insbesondere ist die Erfindung lediglich in Verbindung mit einem Heckscheibenrollo veranschaulicht. Es leuchtet ohne weiteres ein, dass die erfinderische Maßnahme in Verbindung mit jeder Art von Rollo im Kraftfahrzeugbereich verwendet werden kann, bei dem der Antrieb durch formschlüssig angetriebene Schubglieder erfolgt. So kommen insbesondere auch Seitenfenster oder Dachfenster bzw. die Rollos von Laderaumabdeckungen in Frage.

In der Zeichnung ist ein Ausführungsbeispiel des Gegenstandes der Erfindung dargestellt. Es zeigt:
- Fig. 1: eine perspektivische Ansicht auf einen aufgebrochenen Fondbereich eines PKW unter Veranschaulichung eines Heckscheibenrollos;
- Fig. 2: den prinzipiellen Aufbau des Heckscheibenrollos nach Fig. 1 und
- Fig. 3: einen Ausschnitt aus der Prinzipdarstellung nach

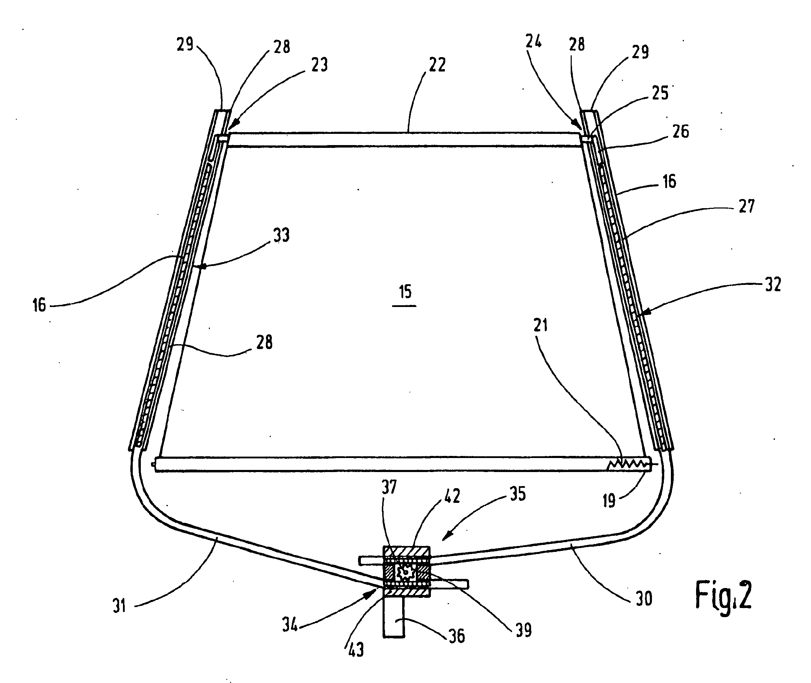

Fig. 2 unter Veranschaulichung des Anschlags zur Begrenzung des Ausfahrhubs.

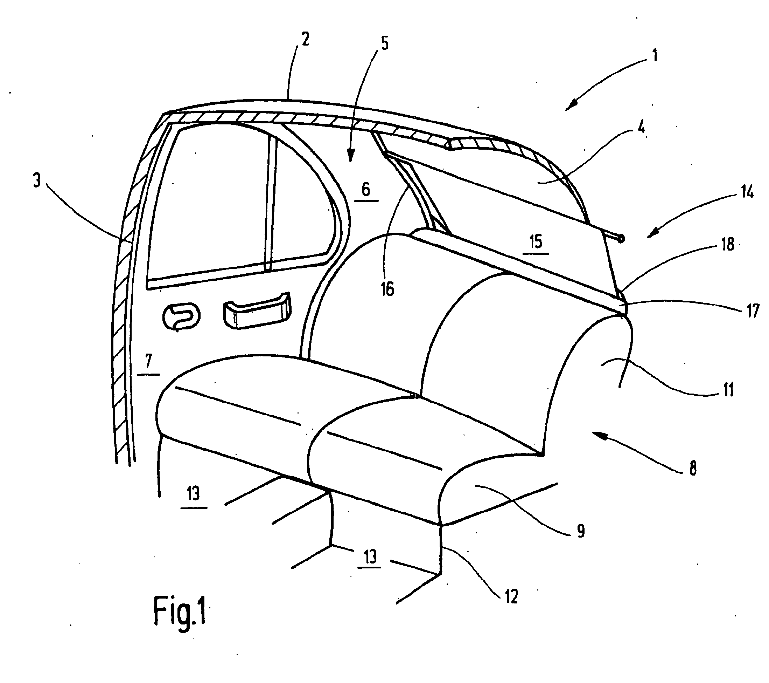

Fig. 1 stellt den aufgebrochenen abgeschnittenen Fondbereich eines Pkw dar. Die Figur veranschaulicht einen Blick auf die rechte Innenseite, die zu der weggebrochenen linken Innenseite spiegelbildlich ist. Die Darstellung ist vereinfacht, so sind beispielsweise Karosserieinnenstrukturen, wie Versteifungen und Befestigungsmittel, nicht gezeigt, da die Darstellung für das Verständnis der Erfindung nicht erforderlich ist.

Der veranschaulichte Karosserieabschnitt 1 weist ein Dach 2 auf, von dem seitlich eine B-Säule 3 nach unten zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule, die sich im Abstand zu der B-Säule 3 befindet. Die C-Säule 5 trägt eine Innenverkleidung 6.

Zwischen der B-Säule 3 und der C-Säule 5 ist an der B-Säule eine hintere rechte Seitentür 7 in der bekannten Weise anscharniert.

Auf der Höhe der hinteren rechten Seitentür befindet sich eine Rücksitzbank 8, zu der eine Sitzfläche 9 sowie eine Rücksitzlehne 11 gehören. Die Rücksitzfläche 9 liegt auf einer Sockelfläche 12, die zu der Bodengruppe gehört und in der vor der Rücksitzfläche 9 Fußräume 13 ausgebildet sind.

Auf der Innenseite vor dem Heckfenster 4 befindet sich ein Heckscheibenrollo 14. Von dem Heckscheibenrollo 14 ist dessen teilweise ausgezogener Rollobahn 15 sowie eine der seitlichen Führungsschienen 16 zu erkennen. Die Führungsschiene 16 beginnt an einer hinter der RÜcksitzlehne 11 vorhandenen Hutablage 17 und verläuft neben der seitlichen Fensterkante. Die Führungsschiene besteht aus Kunststoff und ist in der die C-Säule 5 verkleidenden Innenverkleidung integriert.

Außerdem enthält die Hutablage 17 einen durchgehenden Auszugsschlitz 18, aus dem die Rollobahn 15 beim Ausfahren herausläuft.

Der prinzipielle Aufbau des Heckscheibenrollos 14 ergibt sich aus Fig. 2.

Unterhalb der Hutablage 17, wie man aus Fig. 2 erkennt, erstreckt sich eine Wickelwelle 19, die drehbar gelagert und an der mit einer Kante die Rollobahn 15 befestigt ist. Die Wickelwelle 19 ist mit Hilfe eines schematisch angedeuteten Federmotors 21 im Sinne des Aufwickelns der Rollobahn 15 auf die Wickelwelle 19 vorgespannt. Hierzu ist eine Schraubenfeder vorgesehen, die einends karosseriefest verankert ist und andernends in der Wickelwelle 19 festgelegt ist.

Die Rollbahn 15 weist einen etwa trapezförmigen Zuschnitt auf und ist an ihrer von der Wickelwelle 19 abliegenden Kante mit einer schlauchförmigen Schlaufe versehen. Durch die schlauchförmige Schlaufe führt ein Auszugsprofil oder Spriegel 22, in dem Führungsstücke 23, 24 die teleskopartig gelagert sind. Die Führungsstücke 23, 24 weisen ein Halsteil 25 auf, der einen kleineren Durchmesser aufweist, als ein an sich daran anschließendes Führungsglied 26. Das Führungsglied hat die Gestalt eines kurzen zylinderförmigen Abschnitts.

Die Führungsstücke 26 laufen in den zueinander spiegelbildlich angeordneten Führungsschienen 17, die neben den beiden Seitenkanten des Heckfensters 4 angeordnet sind. Jede Führungsschiene 16 enthält eine Führungsnut 27 deren Querschnittsprofil sich aus einem Nutenschlitz 28 und einer Nutenkammer 29 zusammensetzt. Der Durchmesser der Nutenkammer 29 entspricht dem Führungsglied 26 während die Weite des Nutenschlitzes 28, die kleiner ist als der Durchmesser der kreisförmigen Nutenkammer 29, ein Durchtritt des Halsteils 25 gestattet.

Das untere Ende jeder Führungsschiene 16 ist mit einem Führungsrohr 30, 31 verbunden. In jedem Führungsrohr 30, 31 ist jeweils ein biegsames druckfestes Schubglied 32, 33 geführt, das anschließend bis in die Nutenkammer 29 der jeweiligen Führungsschiene 16 vorschiebbar ist.

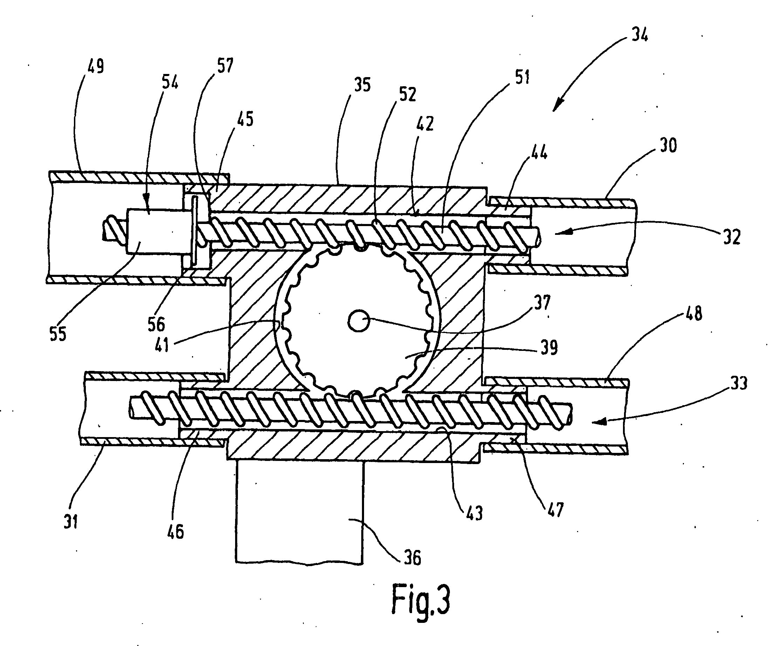

Der Aufbau der Schubglieder 32, 33 ist nachstehend anhand von Fig. 3 näher erläutert.

Am von den Führungsschienen 16 abliegenden Ende der Führungsrohre 30, 31 befindet sich ein Getriebemotor 34 mit einem Getriebegehäuse 35.

Gemäß Fig. 3 ist an das Getriebegehäuse 35 ein permanenteregter Gleichstrommotor 36 angeflanscht, der über ein nicht dargestelltes Stirnrad oder Schneckengetriebe eine Ausgangswelle 37 antreibt. Auf der Ausgangswelle 37 sitzt drehfest ein Ausgangszahnrad 39, das in einem Hohlraum 41 des Getriebegehäuses angeordnet ist. Der Hohlraum 41 hat eine etwa zylindrische Gestalt.

Tangential zu dem Hohlraum 41 führen durch das Getriebegehäuse 35 zwei gerade Durchgangsbohrungen 42 und 43 hindurch. In Verlängerung der beiden Durchgangsbohrungen 41 und 43 sind damit fluchtende rohrförmige Anschlussstutzen 44, 45, 46 und 47 vorgesehen. Auf dem Anschlussstutzen 44 steckt gesichert das Führungsrohr 30, das beispielsweise aus einem festen PVC-Material besteht. Das Führungsrohr 31, das aus einem gleichen Material hergestellt ist, steckt auf dem Anschlussstutzen 46. Die Anschlussstutzen 47 und 45 stehen mit Speicherrohren 48 und 49 ebenfalls aus einem beschränkt biegsamen Material in Verbindung.

Mit Hilfe der beiden schematisch gezeigten Verbindungsrohre 30 und 31 sind die Schubglieder 32 und 33 zwischen dem Getriebegehäuse 35 und den Führungsschienen 32, 33 ausknicksicher geführt, um Druckkräfte übertragen zu können.

Wie die Darstellung von Fig. 3 erkennen lässt, setzt sich jedes der Schubglieder 32, 33 aus einer zylindrischen biegsamen Seele 51 und einer die Seele 51 umgebenden Wendel 52 zusammen, die fest mit der Außenumfangsfläche der zylindrischen Seele verbunden ist. Es entsteht auf diese Weise ein Art flexibler Zahnstangen mit um den Umfang herumlaufender Schrägverzahnung. An dieses "Zahnstangenprofil" ist die Verzahnung des Zahnrads 36 angepasst. Aufgrund des tangentialen Verlaufs der beiden Durchgangsbohrungen 42 und 43 werden die beiden biegsamen Schublieder 32, 33 mit der Verzahnung des Ausgangszahnrades 36 in Eingriff gehalten.

Lediglich auf dem Schubglied 32 ist, wie Fig. 3 weiter zeigt, eine Anschlaghülse 54 aufgecrimpt. Die Anschlaghülse 54 besteht aus einem rohrförmigen Abschnitt 55 und einem Flansch oder Bund 56, der dem Getriebegehäuse 35 zugewandt ist.

Die lichte Weite des Anschlussstutzens 45 ist so gewählt, dass der Bund 56 bis zu einer Bodenfläche 57 eindringen kann.

Die Funktionsweise der gezeigten Anordnung ist wie folgt:

Im eingefahrenen Zustand ist die Rollobahn 15 vollständig auf der Wickelwelle 19 aufgewickelt. Die Schubglieder 32, 33 sind soweit aus den Führungsschienen 16 zurückgezogen, dass sie praktisch nicht mehr mit den Führungsgliedern 26 in Verbindung stehen. Dies bedeutet umgekehrt, dass die Führungsglieder 32, 33 maximal in die Speicherrohre 48, 49 zurückgeschoben sind. Das Arbeitstrum, d.h. jener Abschnitt der Schubglieder 32, 33, der zwischen dem Zahnrad 36 und dem zugehörigen Führungsglied 26 liegt, hat seine kürzeste Länge, während dem dementsprechend das Leertrum, das im Speicherrohr liegt, seine größte Erstreckung hat.

Wenn der Benutzer das Rollo 14 ausfahren will, setzt er über einen entsprechenden Schalter den Motor 36 mit der passenden Drehrichtung in Gang. Hierdurch wird auch das Zahnrad 36 in Umdrehung versetzt. Das Zahnrad 46 schiebt die beiden Schubglieder 32, 33, bezogen auf Fig. 3, jeweils um den gleichen Betrag, jedoch gegensinnig, in Richtung auf die Führungsschienen 16 vor. Der Vorschub geschieht formschlüssig, weil die verzahnt wirkende Wendel 52 in die Verzahnung des Zahnrads 36 eingreift. Die Bewegung beider Schubglieder 32, 33 wird blockiert, sobald der Flansch 56 an der Anschlagfläche 57 zur Anlage kommt. Die formschlüssige Anlage zwischen diesen Teilen blockiert das gesamte Getriebe bis hin zu dem Motor 36, obwohl der Strom eingeschaltet bleibt. Da durch die Blockierung des Schubgliedes 32 das Zahnrad 39 stehen bleibt, bleibt auch das Schubglied 33 stehen.

Aus der Funktionsbeschreibung ergibt sich, dass die Anschlaghülse 54 an einer solchen Stelle auf dem Leertrum des einen Schubgliedes angeordnet ist, dass die Blockierung genau an der Stelle erfolgt, an der die konstruktionsmäßige maximale Ausfahrstellung des Fensterrollos 14 erreicht ist. Wie sich aus der Erläuterung ergibt, geschieht das Blockieren, ohne dass hierdurch ein zusätzlicher Druck auf das jeweilige Arbeitstrum des Schubgliedes 32, 33 ausgeübt wird.

Aus der Beschreibung ergibt sich auch, dass das Leertrum hinreichend zugfest sein muss, damit es zu der gewünschten Blockierwirkung kommt.

Der Flansch 56 ist entbehrlich, wenn dafür gesorgt wird, dass der rohrförmige Teil 55 einen hinreichenden Durchmesser hat und sich nicht in der Durchgangsbohrung 42 verklemmen kann. Die Anschlagflächen müssen auch so gewählt sein, dass eine Verkeilung ausgeschlossen ist.

Nach einer vorbestimmten Zeit, die größer ist als das Rollo erwartungsgemäß braucht um vollständig ausgefahren zu werden, wird durch die Steuerung des Kraftfahrzeugs selbsttätig der Strom für den Motor abgeschaltet.

Um das Fensterrollo 14 einfahren zu können, genügt es, den Motor mit der umgekehrten Polarität an die Bordspannung des Fahrzeugs zu legen. Die Schubglieder 32 und 33 werden sodann aus den Führungsschienen 16 zurückgezogen. Entsprechend dem Zurückweichen der Schubglieder 32, 33 kann der schwächer ausgelegte Federmotor 21 die Rollobahn 15 auf der Wickelwelle 19 aufwickeln.

Zwischen der Anschlaghülse 54 und der Boden flächen kann noch eine Elastomerscheibe als Dämpfungselement eingefügt sein.

Es bedarf keiner figürlichen Darstellung, um zu verstehen, dass diese Art der Blockierung beim Erreichen der Endstellung nicht auf den gezeigten Anwendungsfall eines Heckfensters beschränkt ist. Diese Getriebeanordnung kann in gleicher Weise bei Seitenfenstern verwendet werden, soweit sie über dasselbe Prinzip angetrieben werden. Das gleiche gilt für Dachfenster und auch die Abdeckplanen von Laderaumabdeckungen, soweit der Grundaufbau mit dem Aufbau nach Fig. 2 übereinstimmt.

Bei einem Rollo erfolgt die Ausfahrbewegung der Rollobahn mit Hilfe von Schubgliedern. Um die Bewegung der Schubglieder in der Endlage zu begrenzen, wenn gleichzeitig der Antriebsmotor eingeschaltet bleibt, sitzt auf wenigstens einem der Schubglieder ein Anschlagelement, das gegen einen ortsfesten Anschlag läuft und die weitere Bewegung blockiert.

## Patentansprüche

1. Fensterrollo für Kraftfahrzeuge (1),
mit einer Wickelwelle (19), die drehbar gelagert ist,
mit einer Rollobahn (15), die mit einer Kante an der Wickelwelle (19) befestigt ist,
mit einem Auszugsprofil (22) das mit der von der Wickelwelle abliegenden Kante der Rollobahn (15) verbunden ist,
mit einem Federmotor (21), der mit der Wickelwelle (19) gekoppelt ist und der die Wickelwelle (19) im Sinne des Aufwickelns der Rollobahn (15) auf die Wickelwelle (19) vorspannt,
mit wenigstens einer Führungsschiene (16), in der wenigstens ein Ende des Auszugsprofils (22) geführt ist,
mit wenigstens einem linienförmigen Schubglied (32,33), um des Auszugsprofil (22) längs der Führungsschiene (16) entgegen der Wirkung des Federmotors (21) von der Wickelwelle (19) weg zu bewegen-,
mit einem Getriebemotor (34), der ein Getriebegehäuse (35) aufweist, durch das das Schubglied (32,33) hindurch führt, der auf seiner Ausgangswelle (37) ein Antriebszahnrad (39) trägt, das mit dem Schubglied (32,33) formschlüssig zusammenwirkt und das das Schubglied (32,33) in ein zwischen dem Antriebszahnrad (39) und dem Auszugsprofil (22) liegenden Arbeitstrum und ein Leertrum aufteilt, und
mit einem Anschlag (54), der mit dem Leertrum des Schubglieds (32,33) fest verbunden ist um den Hub des Schubglieds (32,33) formschlüssig zu begrenzen.

2. Fensterrollo nach Anspruch 1, **dadurch gekennzeichnet, dass** zwei Führungsschienen (16) vorgesehen sind.

3. Fensterrollo nach Anspruch 1, **dadurch gekennzeichnet, dass** das Auszugsprofil (22) beidends in Führungsschienen (16) geführt ist.

4. Fensterrollo nach Anspruch 1, **dadurch gekennzeichnet, dass** jede Führungsschiene (16) eine Führungsnut (27) enthält, die sich im Querschnitt gesehen, aus einer Nutenkammer (29) und einem Nutenschlitz (28) zusammensetzt, wobei die lichte Weite des Nutenschlitzes (28) kleiner ist als die lichte Weite der Nutenkammer (29).

5. Fensterrollo nach Anspruch 1, **dadurch gekennzeichnet, dass** die Führungsnut (27) zur ausknicksicheren Führung des Schubglieds (32,33) verwendet wird.

6. Fensterrollo nach Anspruch 1, **dadurch gekennzeichnet, dass** das Schubglied (32,33) die Gestalt einer biegeelastischen Zahnstange aufweist, die sich aus einer in Längsrichtung durchgehenden zylindrischen Seele (51) und wenigstens einer aus dem Umfang angeordneten Wendel (52) zusammensetzt.

7. Fensterrollo nach Anspruch 1, **dadurch gekennzeichnet, dass** die Teilung der Zahnstange (32,33) mit der Teilung des Zahnrads (39) übereinstimmt.

8. Fensterrollo nach Anspruch 1, **dadurch gekennzeichnet, dass** das Getriebegehäuse (35) aus einem festen Material besteht.

9. Fensterrollo nach Anspruch 1, **dadurch gekennzeichnet, dass** das Getriebegehäuse (35) eine Durchgangsbohrung (42,43) enthält durch die das Schubglied (32,33) hindurch führt

10. Fensterrollo nach Anspruch 9, **dadurch gekennzeichnet, dass** das Schubglied (32,33) durch die Durchgangsbohrung (42,43) spielarm hindurchführt.

11. Fensterrollo nach Anspruch 1, **dadurch gekennzeichnet, dass** das Gehäuse (35) in der Umgebung der Durchgangsbohrung (42,43) für das Anschlag (54) als Anlagefläche wirkt.

12. Fensterrollo nach Anspruch 1, **dadurch gekennzeichnet, dass** das Anschlagglied (54) ein rohrförmiges Teil ist.

13. Fensterrollo nach Anspruch 1, **dadurch gekennzeichnet, dass** das Anschlagglied (54) die Form eines Hohlnits aufweist.

14. Fensterrollo nach Anspruch 1, **dadurch gekennzeichnet, dass** das Anschlagglied (54) mit dem Schubglied (32,33) vercrimpt ist.

15. Fensterrollo nach Anspruch 1, **dadurch gekennzeichnet, dass** das Anschlagglied (54) von einer crimpbaren Hülse gebildet ist.

16. Fensterrollo nach Anspruch 1, **dadurch gekennzeichnet, dass** das Anschlagglied (54) auf das Schubglied aufgespritzt ist.

## Claims

1. Window roller blind for motor vehicles (1),
with a winding shaft (19), which is rotatably mounted,
with a blind sheet (15), which is fastened to the winding shaft (19) at one edge,
with a pull-out profile (22), which is connected to the edge of the blind sheet (15) remote from the winding shaft,
with a spring motor (21), which is coupled to the winding shaft (19) and biases the winding shaft (19) in the sense of winding up the blind sheet (15) onto the winding shaft (19),
with at least one guide rail (16), in which at least one end of the pull-out profile (22) is guided,
with at least one linear pushing member (32, 33) to move the pull-out profile (22) along the guide rail (16) away from the winding shaft (19) against the effect of the spring motor (21),
with a geared motor (34), which has a transmission case (35), through which the pushing member (32, 33) is guided, which on its output shaft (37) has a drive gear wheel (39), which cooperates positively with the pushing member (32, 33) and divides the pushing member (32, 33) into a working strand located between the drive gear wheel (39) and the pull-out profile (22) and a slack strand, and
with a stop (54), which is fixedly connected to the slack strand of the pushing member (32, 33) to positively restrict the stroke of the pushing member (32, 33).

2. Window roller blind according to claim 1, **characterised in that** two guide rails (16) are provided.

3. Window roller blind according to claim 1, **characterised in that** the pull-out profile (22) is guided in guide rails (16) at both ends.

4. Window roller blind according to claim 1, **characterised in that** each guide rail (16) includes a guide groove (27), which, viewed in cross-section, consists of a groove chamber (29) and a groove slot (28), wherein the width of the groove slot (28) is smaller than the width of the groove chamber (29).

5. Window roller blind according to claim 1, **characterised in that** the guide groove (27) is used for buckle-resistant guidance of the pushing member (32, 33).

6. Window roller blind according to claim 1, **characterised in that** the pushing member (32, 33) has the structure of a pliant toothed rack, which consists of a cylindrical core (51) extending through it in the longitudinal direction and at least one spiral (52) arranged out of the periphery.

7. Window roller blind according to claim 1, **characterised in that** the pitch of the toothed rack (32, 33) is the same as the pitch of the gear wheel (39).

8. Window roller blind according to claim 1, **characterised in that** the transmission case (35) is made from a solid material.

9. Window roller blind according to claim 1, **characterised in that** the transmission case (35) contains a through-hole (42, 43), through which the pushing member (32, 33) is directed.

10. Window roller blind according to claim 9, **characterised in that** the pushing member (32, 33) is directed through the through-hole (42, 43) with low play.

11. Window roller blind according to claim 1, **characterised in that** the case (35) acts as an abutment surface for the stop (54) in the surrounding area of the through-hole (42, 43).

12. Window roller blind according to claim 1, **characterised in that** the stop member (54) is a tubular part.

13. Window roller blind according to claim 1, **characterised in that** the stop member (54) has the form of a hollow rivet.

14. Window roller blind according to claim 1, **characterised in that** the stop member (54) is crimped with the pushing member (32, 33).

15. Window roller blind according to claim 1, **characterised in that** the stop member (54) is formed by a crimpable sleeve.

16. The window roller blind of claim 1, **characterised in that** the stop member (54) being injection-moulded onto the thrust member.

## Revendications

1. Store enrouleur de fenêtre pour véhicules automobiles (1),
comprenant un arbre d'enroulement (19) qui est monté tournant,
comprenant une bande de store (15) qui est fixée par un bord à l'arbre d'enroulement (19),
comprenant un profilé de traction (22) qui est lié au bord de la bande de store (15) qui est éloigné de l'arbre d'enroulement,
comprenant un moteur à ressort (21) qui est accouplé à l'arbre d'enroulement (19) et qui met l'arbre d'enroulement (19) sous précontrainte dans le sens de l'enroulement de la bande de store (15) sur l'arbre (19),
comprenant au moins un rail de guidage (16) dans lequel est guidé au moins une extrémité du profilé de traction (22),
comprenant au moins un élément de poussée (32, 33) linéaire, destiné à éloigner le profilé de traction (22) de l'arbre d'enroulement (19), le long du rail de guidage (16) et à l'encontre de l'action du moteur à ressort (21),
comprenant un motoréducteur (34) qui présente un carter d'engrenage (35), dans lequel passe l'élément de poussée (32, 33), et qui porte sur son arbre de sortie (37) une roue dentée motrice (39) qui coopère par complémentarité de formes avec l'élément de poussée (32, 33) et qui divise l'élément de poussée (32, 33) en un tronçon chargé, situé entre la roue dentée motrice (39) et le profilé de traction (22), et un tronçon non chargé, et
comprenant une butée (54) qui est liée solidement au tronçon non chargé de l'élément de poussée (32, 33), afin de limiter par complémentarité de formes la course de l'élément de poussée (32, 33).

2. Store enrouleur de fenêtre selon la revendication 1, **caractérisé par le fait qu'**il est prévu deux rails de guidage (16).

3. Store enrouleur de fenêtre selon la revendication 1, **caractérisé par le fait que** le profilé de traction (22) est guidé à ses deux extrémités dans des rails de guidage (16).

4. Store enrouleur de fenêtre selon la revendication 1, **caractérisé par le fait que** chaque rail de guidage (16) comporte une rainure de guidage (27) qui, vue en section, se compose d'une cavité de rainure (29) et d'une fente de rainure (28), sachant que la largeur libre de la fente de rainure (28) est inférieure à la largeur libre de la cavité de rainure (29).

5. Store enrouleur de fenêtre selon la revendication 1, **caractérisé par le fait que** la rainure de guidage (27) est utilisée pour le guidage résistant au flambage de l'élément de poussée (32, 33).

6. Store enrouleur de fenêtre selon la revendication 1, **caractérisé par le fait que** l'élément de poussée (32, 33) présente la forme d'une crémaillère élastique en flexion qui se compose d'un noyau (51) cylindrique, continu dans le sens longitudinal, et d'au moins une hélice (52) disposée sur le pourtour.

7. Store enrouleur de fenêtre selon la revendication 1, **caractérisé par le fait que** le pas de la crémaillère (32, 33) correspond au pas de la roue dentée (39).

8. Store enrouleur de fenêtre selon la revendication 1, **caractérisé par le fait que** le carter d'engrenage (35) est constitué d'un matériau solide.

9. Store enrouleur de fenêtre selon la revendication 1, **caractérisé par le fait que** le carter d'engrenage (35) comporte un trou débouchant (42, 43) dans lequel passe l'élément de poussée (32, 33).

10. Store enrouleur de fenêtre selon la revendication 9, **caractérisé par le fait que** l'élément de poussée (32, 33) passe avec faible jeu dans le trou débouchant (42,43).

11. Store enrouleur de fenêtre selon la revendication 1, **caractérisé par le fait que** dans la zone entourant le trou débouchant (42, 43), le carter (35) sert de surface d'appui pour la butée (54).

12. Store enrouleur de fenêtre selon la revendication 1, **caractérisé par le fait que** l'élément de butée (54) est une pièce tubulaire.

13. Store enrouleur de fenêtre selon la revendication 1, **caractérisé par le fait que** l'élément de butée (54) présente la forme d'un rivet creux.

14. Store enrouleur de fenêtre selon la revendication 1, **caractérisé par le fait que** l'élément de butée (54) est lié par sertissage à l'élément de poussée (32, 33).

15. Store enrouleur de fenêtre selon la revendication 1, **caractérisé par le fait que** l'élément de butée (54) est formé d'une douille permettant d'effectuer un sertissage.

16. Store enrouleur de fenêtre selon la revendication 1, **caractérisé par le fait que** l'élément de butée (54) est moulé par injection sur l'élément de poussée.
